Europäisches Patentamt

(19) European Patent Office

Office européen des brevets

(11) Publication number: **0 326 189 B1**

(12) **EUROPEAN PATENT SPECIFICATION**

(45) Date of publication of patent specification:
11.12.91 Bulletin 91/50

(51) Int. Cl.⁵: **F04C 29/10, F16K 47/00**

(21) Application number: **89104379.6**

(22) Date of filing: **08.08.86**

(54) **Scroll type compressor with variable displacement mechanism.**

(30) Priority: **10.08.85 JP 174968/85**
**04.09.85 JP 134406/85**

(43) Date of publication of application:
**02.08.89 Bulletin 89/31**

(60) Publication number of the earlier application in accordance with Art. 76 EPC: **0 211 672**

(45) Publication of the grant of the patent:
**11.12.91 Bulletin 91/50**

(84) Designated Contracting States:
**DE FR GB IT SE**

(56) References cited:
**EP-A- 0 144 169**
**FR-A- 2 551 170**
**US-A- 2 320 008**
**US-A- 2 717 001**
**US-A- 2 964 286**

(73) Proprietor: **SANDEN CORPORATION**
**20 Kotobuki-cho**
**Isesaki-shi Gunma, 372 (JP)**

(72) Inventor: **Sato, Tadashi**
**13-108 Aramaki-machi**
**Maebushi-shi Gunma, 371 (JP)**
Inventor: **Terauchi, Kiyoshi**
**8-14 Heiwa-cho**
**Isesaki-shi Gunma, 372 (JP)**
Inventor: **Mabe, Atsushi**
**4332-1 Mimoro-cho**
**Isesaki-shi Gunma, 372 (JP)**

(74) Representative: **Brunner, Michael John et al**
**GILL JENNINGS & EVERY 53-64 Chancery Lane**
**London WC2A 1HN (GB)**

## Description

The present invention relates to a scroll type compressor, and more particularly, to a scroll type compressor with a variable displacement mechanism.

When the air conditioning load in the compartment of a car is decreased by an air conditioning system, or the temperature in the compartment of a car is below the predetermined temperature, the displacement of the compressor for the air conditioning system does not need to be at its maximum. Accordingly, the compression ratio can be decreased.

Scroll type compressors which can vary the compression ratio are well known, see for example, US-A-4505651 and our US-A-4642034 (EP-A-0144169), which show scroll type compressors with variable displacement mechanisms.

However, in US-A-4505651, the change of the compression ratio is not sufficiently large. Also, in the mechanism shown in US-A-4642034 the temperature of discharge fluid increases abnormally when the compressor operates at high speed.

One resolution to above problems is disclosed in our US-A-4744733 (EP-A-0206759).

Referring to Figure 1, a variable displacement mechanism which is disclosed in US-A-4744733 is explained. A control mechanism 1 for varying the displacement of the compressor includes a cylinder 2, a piston 3 which is slidably disposed in the cylinder 2 and a spring 4 which is disposed between the bottom portion of the cylinder 2 and the piston 3. When an electromagnetic valve 5 is energized, compressed gas in a discharge chamber (not shown) is introduced into the cylinder 2 through a capillary tube (not shown). Since the pressure of the compressed gas is larger than the recoil strength of the spring 4 and the pressure in an intermediate pressure chamber 6, the piston 3 is urged downward and closes the opening of the intermediate pressure chamber 6. Accordingly, the compression ratio of the compressor is increased.

On the other hand, when the electromagnetic valve 5 is de-energized, compressed gas is not supplied to the cylinder 2. Thus, the pressure in the cylinder 2 becomes less than the recoil strength of the spring 4 and the pressure in the intermediate pressure chamber 6, and the piston 3 is urged upward, the intermediate pressure chamber 6 being connected with a communicating chamber 7 through the cylinder 2. Accordingly, refrigerant gas in the intermediate pressure chamber 6 flows into the communicating chamber 7 through the cylinder 2. Thus, since the volume of compressed gas which is discharged into the discharge chamber is decreased, the compression ratio of the compressor is decreased.

In a scroll type compressor with the above-mentioned variable displacement mechanism, if the electromagnetic valve 5 is closed the communication between the cylinder 2 and the discharge chamber to change the maximum compression ratio towards the minimum compression ratio, high pressure gas in the cylinder 2 gradually leaks into the communicating chamber 7 and the intermediate chamber 6 through a gap between the inner surface of the cylinder 2 and the outer peripheral portions of the piston 3. Thus, the pressure in the cylinder 2 gradually decreases, and if the pressure in the cylinder 2 becomes less than the recoil strength of spring 4 and the pressure in intermediate pressure chamber 6, the piston 3 is pushed upwards. As a result of this movement of the piston 3, the volume in the cylinder 2 is decreased. Therefore, the piston 3 is urged downward again. However, the compressed gas in the cylinder 2 is continuously leaking into the communicating and intermediate chambers so that the piston 3 gradually moves up with a reciprocating or vibratory motion. If vibration of the piston occurs in each operation, durability of the piston is reduced. Noise is also generated by the vibration of the piston. Furthermore, if the piston is vibratedly reciprocated within the cylinder, the operation of the variable displacement mechanism cannot be achieved stably.

On the other hand, when the piston 3 is urged downwards and closes the opening of the intermediate pressure chamber 6, the outer edge of the piston 3 abuts against the inner bottom surface of the cylinder 2 and causes impact noise. Also, the piston 3 is abraded due to the impact intermediately, and the reliability of the control mechanism is reduced.

Our EP-A-0144169 discloses a scroll type compressor including a housing having an inlet port and outlet port ; a fixed scroll fixedly disposed within the housing and having a circular end plate from which a first spiral element extends ; an orbiting scroll having a circular end plate from which a second spiral element extends, the first and second spiral elements interfitting at an angular and radial offset to make a plurality of line contacts to define at least one pair of fluid pockets within the interior of the housing ; a driving mechanism operatively connected to the orbiting scroll to effect orbital motion of the orbiting scroll to change the volume of the fluid pockets ; a rotation preventing mechanism for preventing rotation of the orbiting scroll during orbital motion, the circular end plate of the fixed scroll dividing the interior of the housing into a front chamber and a rear chamber, the front chamber being connected with the inlet port, and the rear chamber being divided into a discharge chamber which connects the outlet port and a central fluid pocket formed between the scrolls, and an intermediate pressure chamber ; at least one pair of holes formed through the circular end plate of the fixed scroll to form a fluid channel between the fluid pockets and the intermediate pressure chamber ; a communication channel formed through the circular plate of the fixed scroll to form a fluid channel between the intermediate pressure chamber and the front chamber, and a control means disposed on a portion of the intermediate pressure chamber for controlling the communication between the intermediate pressure chamber and the suction chamber, the control means comprising a cylinder ; a piston slidably disposed within the cylinder ; and a communicating means ; the cylinder connecting with the intermediate pressure chamber, the suction chamber and the discharge chamber, the piston sliding within the cylinder in accordance with the pressure difference between the pressure in the cylinder and the pressure in the intermediate pressure chamber.

It is an object of the present invention to provide a scroll type compressor with a variable displacement mechanism which operates stably and with high durability and which can function with reduced noise levels.

According to the present invention such a compressor is characterized in by the communicating means being arranged to pass the discharged gas in the cylinder into the suction chamber when the piston has been pushed upwards from the lowermost position by a given distance, and by a shock absorbing element being disposed on the bottom of the piston to absorb the impact force between the inner end surface of the cylinder and the piston and for securing sealing between the piston and the inner end surface of the cylinder.

Examples of mechanisms constructed in accordance with the invention will now be described with reference to the accompanying drawings, in which :

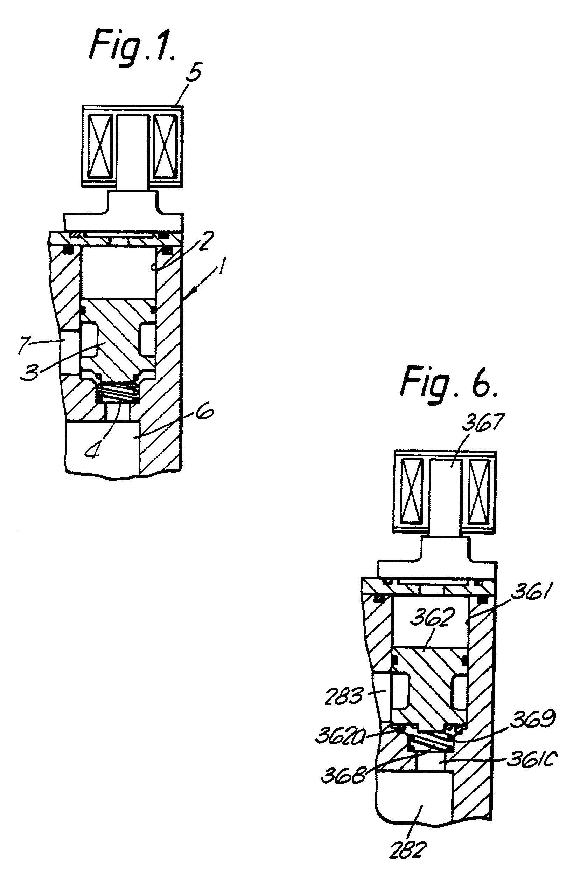

Figure 1 is a partly cross-sectional view of a scroll type compressor illustrating a conventional variable displacement mechanism ;

Figure 2 is a simplified cross-sectional view of a scroll type compressor according to EP-A-211671 ; the present patent originating from a divisional application based on said EP-A-211671.

Figure 3(a) is a cross-sectional view taken along the line A-A of Figure 1 ;

Figure 3(b) is a cross-sectional view taken along the line B-B of Figure 1 ;

Figure 4 is a perspective view of a piston ring which is used in the variable displacement mechanism shown in Figure 2 ;

Figure 5 is a cross-sectional view of a second variable displacement mechanism for a scroll type compressor according to claim 1 ; and

Figure 6 is a cross-sectional view of a variable displacement mechanism which is a modification of the mechanism shown in Figure 5.

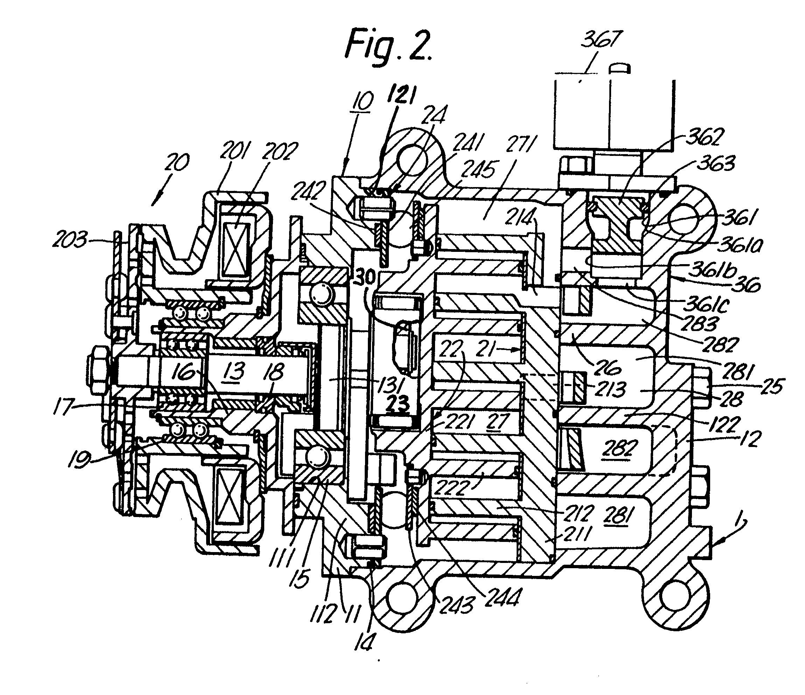

The scroll type compressor shown in Figure 2 includes a compressor housing 10 having a front end plate 11 and a cup-shaped casing 12 which is attached to an end surface of the end plate 11. A hole 111 is formed in the centre of the front end plate 11 for receiving a drive shaft 13. An annular projection 112 is formed on a rear surface of front end plate 11, facing the cup-shaped casing 12 and is concentric with the hole 111. An outer peripheral surface of the projection 112 extends into an inner wall of the opening of the cup-shaped casing 12. Thus, an opening 121 of the cup-shaped casing 12 is covered by the front end plate 11. An O-ring 14 is located between the outer peripheral surface of the annular projection 112 and the inner wall of the opening of the cup-shaped casing 12 to seal the mating surface of the front end plate 11 and the cup-shaped casing 12.

An annular sleeve 16 projects from the front end surface of the front end plate 11 to surround the drive shaft 13 and define a shaft seal cavity. In the embodiment shown in Figure 2, the sleeve 16 is formed separately from the front end plate 11 and is fixed to its front end surface by screws (not shown). Alternatively, the sleeve 16 may be formed integrally with the front end plate 11.

The drive shaft 13 is rotatably supported by the sleeve 16 through a bearing 17 located within the front end of the sleeve 16. The drive shaft 13 has a disk-shaped rotor 131 at its inner end which is rotatably supported by the front end plate 11 through a bearing 15 located within the opening 111 in the front end plate 11. A shaft seal assembly 18 is coupled to the drive shaft 13 within the cavity of the sleeve 16.

A pulley 201 is rotatably supported by a ball bearing 19 which is carried on the outer surface of the sleeve 16, and an electromagnetic coil 202 is fixed about the outer surface of the sleeve 16 by a support plate. An armature plate 203 is elastically supported in the outer end of the drive shaft 13. The pulley 201, magnetic coil 202 and armature plate 203 form a magnetic clutch 20. In operation, the drive shaft 13 is driven by an external power source, for example, the engine of an automobile, through the magnetic clutch.

A fixed scroll 21, an orbiting scroll 22, a driving mechanism for the orbiting scroll, and a rotation preventing thrust bearing mechanism 24 for the orbiting scroll 22 are disposed in the interior of the housing 10.

The fixed scroll 21 includes a circular end plate 211 and a spiral element 212 affixed to or extending from one end surface of the circular end plate 211. The fixed scroll 21 is fixed within the inner chamber of the cup-shaped casing 12 by screws 25 screwed into the end plate 211 from outside the cup-shaped casing 12. The circular end plate 211 partitions the inner chamber of the cup-shaped casing 12 into two chambers, a front chamber 27 and a rear chamber 28. The spiral element 212 is located within the front chamber 27.

A partition wall 122 axially projects from the inner end surface of the cup-shaped casing 12 and the end surface of the partition wall 122 contacts the end surface of the circular end plate 211. Thus, the partition wall 122 divides the rear chamber 28 into a discharge chamber 281 formed centrally and an intermediate chamber 282. An O-ring may be disposed between the end surfaces of the partition wall 122 and the end plate 211 to secure the sealing.

The orbiting scroll 22, which is located in the front chamber 27, includes a spiral element 222 affixed to or extending from one end surface of a circular end plate 221. The spiral element 222 and the spiral element 212 interfit at an angular offset of 180° and have a predetermined radial offset. Sealed spaces are thus formed between the spiral elements 212 and 222. The orbiting scroll 22 is rotatably supported by an eccentric bushing 23, which is connected with the inner end of the disc-shaped portion 131 eccentrically of the axis of the drive shaft 13, through a radial needle bearing 30.

While the orbiting scroll 22 orbits, the rotation of orbiting scroll 22 is prevented by the rotation preventing thrust bearing mechanism 24 which is located between the inner end surface of the front end plate 11 and the circular end plate 221. The rotation preventing thrust bearing mechanism 24 includes a fixed ring 241, a fixed race 242, an orbiting ring 243, an orbiting race 244 and balls 245. The fixed ring 241 is attached to the inner end surface of the front end plate 11 through a fixed race 242 and has a plurality of circular holes. An orbiting ring 243 is attached to the rear end surface of the orbiting scroll 22 through an orbiting race 244 and also has a plurality of circular holes. Each ball 245 is placed between a hole of the fixed ring 242 and a hole of the orbiting ring 243, and moves along the edges of both circular holes. Also, the axial thrust load from the orbiting scroll 22 is supported by the front end plate 11 through the balls 245.

The compressor housing 10 is provided with an inlet port (not shown) and an outlet port (not shown) for connecting the compressor to an external refrigerating circuit. Refrigerant gas from the external circuit is introduced into the suction chamber 271 through the inlet port and is taken into the sealed spaces between the spiral elements 212 and 222, through open spaces between the spiral elements. The shape of the openings is formed by the outer terminal end of one spiral element and the outer side surface of the other spiral element, respectively. The openings sequentially open and close during the orbital motion of the orbiting scroll 22. When the opening is open, fluid to be compressed is taken into these spaces but no compression occurs. When the opening is closed, thereby sealing off the spaces, no additional fluid is taken into the spaces and compression begins. Since the location of the outer terminal ends of each spiral element 212 and 222 is at the final involute angle, location of the openings is directly related to the final involute angle $\phi$ end. Furthermore, refrigerant gas in the sealed space is moved radially inwardly and compressed in accordance with the orbital motion of the orbiting scroll 22. Compressed refrigerant gas at the centre sealed space is discharged to the discharge chamber 281 through a discharge port 213, which is formed at the centre of the circular end plate 211.

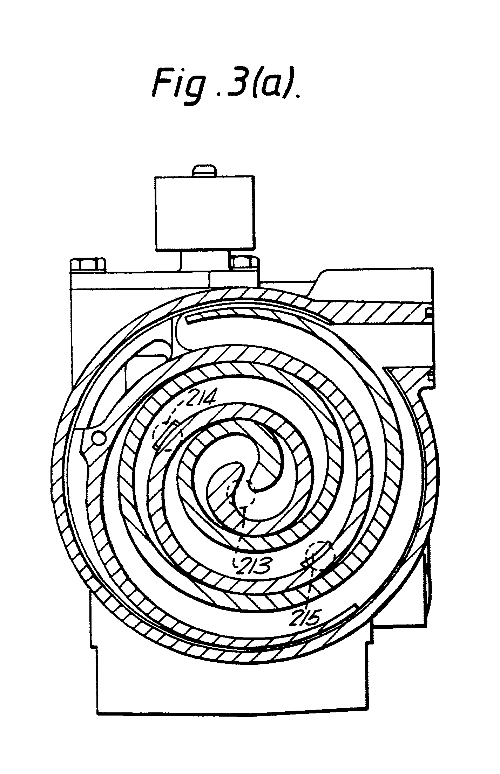

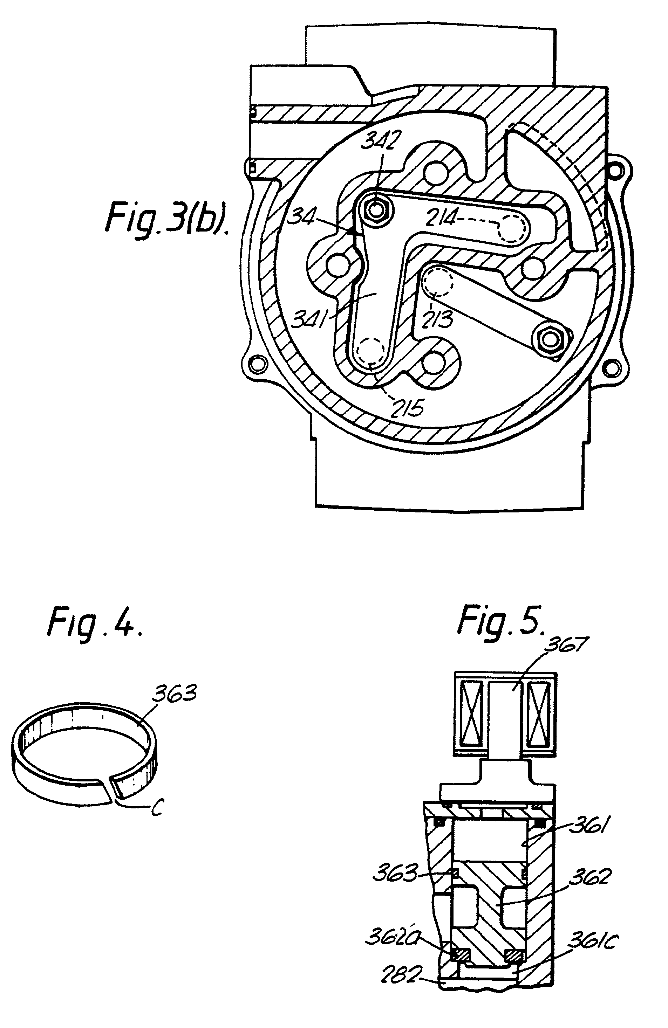

Referring to Figures 3(a) and 3(b), a pair of holes 214, 215 are formed in the end plate 211 and the fixed scroll 21 and are located symmetrically so that an axial end surface of the spiral element 222 of the orbiting scroll 22 simultaneously cross over holes 214, 215. The holes 214, 215 communicate between the sealed space and the intermediate pressure chamber 282. The hole 215 is placed at a position defined by the involute angle $\phi_1$ and opens along the inner side wall of the spiral element 212. The other hole 214 is placed at a position defined by the involute angle ($\phi_1 - \pi$) and opens along the outer side wall of the spiral element 212. A control device, such as a valve member 34 having a valve plate 341 is attached by a fastening device 342 to the end surface of the end plate 211 to oppose the holes 214, 215. The valve plate 341 is made of a spring type material so that the recoil strength of the valve plate 341 pushes itself against the opening of the respective holes 214, 215 to close each hole. A control mechanism 36, which controls communication between the communication chamber 283 and the intermediate chamber 282, includes a cylinder 361, an I-shaped piston 362 slidably disposed within the cylinder 361 and having a piston ring 363. The cylinder 361 is defined with a first cylinder portion and a second cylinder portion below the first cylinder portion and having a smaller diameter than that of the first cylinder portion. A taper-shaped step portion 361a connects the first portion and the second portion. As shown in Figure 2, the inner surface of the first cylinder portion is formed as an annular surface. Alternatively, the inner surface of the first cylinder portion can be formed with a recessed surface to enlarge the diameter from lower portion to upper portion. A first opening 361b is formed on the side surface of the cylinder 361 to be connected with the communication chamber 283, and a second opening 361c is formed on the bottom portion of the cylinder 361 to be connected with the intermediate pressure chamber 282. The upper portion of the cylinder 361 is connected with the discharge chamber 281 through a capillary tube (not shown). The communication between the cylinder 361 and the discharge chamber 281 may be controlled by an electromagnetic valve 367 disposed on the housing 10. The piston ring 363 is loosely fitted in a groove formed in the upper portion of the piston 362 and has a cut out portion C as shown in Figure 4. When the piston ring 363 is in the first cylinder portion, the cut out portion C is expanded by its own recoil strength. Also, since the diameter of the second cylinder portion is less than that of the first cylinder portion, if the piston ring 363 is in the second cylinder portion, the piston ring 363 is forced so as to become smaller in diameter and the cut out portion C becomes smaller.

The operation of the control mechanism 36 will now be described. When the orbiting scroll 22 is operated by the rotation of the drive shaft 13, refrigerant gas which is taken into the sealed spaces defined between the spiral elements 212 and 222. The refrigerant gas in the sealed spaces moves toward the centre of the spiral elements 212 and 222 with the result of volume reduction and compression, and is discharged from the discharge port 213 to the discharge chamber 281.

In this condition, when the electromagnetic valve 367 is energized, i.e. compressed gas in the discharge chamber 281 is introduced into the cylinder 361 through the capillary tube, the pressure in the first cylinder portion becomes higher than that in the second cylinder portion which is connected with the intermediate pressure chamber 282, and the piston 362 is urged downward by the force of compressed gas in the first cylinder portion. In this situation, the second hole 361c which connects the cylinder 361 with the intermediate pressure chamber 282 is covered by the piston 362, and communication between the communication chamber 283 and the intermediate pressure chamber 282 is prevented. Therefore, the pressure in the intermediate pressure chamber 282 is gradually increased due to leakage of gas from fluid pockets through the holes 214 and 215. This leakage of compressed gas continues until pressure in the intermediate pressure chamber 282 is equal to the pressure in the fluid pockets. When pressure equalization occurs, holes 214, 215 are closed by the spring tension of valve plate 341 so that the compression cycle operates normally and the displacement volume of the sealed off fluid pockets is maximized. When the second opening 361c is closed by the piston 362, the control mechanism 36 is formed so that the upper end portion of the piston 362 is located on the second cylinder portion below the taper-shaped step portion 361a, or lower portion of the recessed surface of the first cylindrical portion. Therefore, the leakage of the compressed fluid into first cylindrical portion is restricted.

On the other hand, if the electromagnetic valve 367 is de-energized, communication between the discharge chamber 281 and the cylinder 361 is prevented. Since the upper end portion of the piston 362 is within the second cylinder portion and the piston ring 363 which is disposed on the outer peripheral surface of the upper end portion 362 has a small gap, compressed gas leaks from the first cylinder portion to the second cylinder portion gradually, and the pressure in the first cylinder portion gradually decreases. When the pressure in the cylinder 361 is lower than that in the intermediate pressure chamber 282, piston 362 is pushed upward by the pressure force of the refrigerant gas in the intermediate pressure chamber 282. At that time, the upper end portion of the piston 362 crosses over the taper-shaped step portion 361a toward the first cylinder portion. The force which presses the piston ring 363 radially is removed, and the cut out portion C of piston ring 363 is expanded. Thus, compressed gas in cylinder 361 flows out through the enlarged gap in the piston ring 363. As a result of the leakage of compressed gas, the piston 362 is urged upward rapidly, and the intermediate pressure chamber 282 is connected with the communication chamber 283. The pressure in the intermediate pressure chamber 282 is thus decreased. When the pressure in the intermediate pressure chamber 282 is decreased, the valve plate 341 opens the holes 214, 215, and thus, the compressed gas flows into the intermediate pressure chamber 282 from the fluid pockets through the holes 214, 215 and into the communication chamber 283 through the cylinder 361. Therefore, the volume of compressed gas which is discharged from the sealed off spaces between the scroll elements 112, 222 into the discharge chamber 281 is decreased, and the compression ratio is decreased.

Referring to Figure 5, the control mechanism is shown in more detail, but without the taper of the cylinder. A shock absorber 362a is attached to the bottom end portion of the piston 362. If the electromagnetic valve 367 is energized, compressed gas flows into the cylinder 361 from the discharge chamber 281. Since the pressure of the compressed gas is much higher than the pressure in the intermediate pressure chamber 282, the piston 362 is quickly pushed downward to close the second opening 361c. At that time, the absorber 362a, positioned under the bottom end portion of the piston 362, absorbes the impact force.

Referring to Figure 6, a modification of the control mechanism shown in Figure 5 is disclosed. The shock absorber 362a is disposed around the bottom end portion of the cylinder 361. A step portion 369 is formed around the second opening 361c. A spring 368 is disposed between the step portion 369 and the piston 362 to urge the piston upward. If the electromagnetic valve 367 is energized, compressed gas flows into the cylinder 361 from the discharge chamber 281, and the piston 362 is urged downwards against the recoil strength of the spring 368 and the gas pressure in the intermediate pressure chamber 282. At that time, downward movement of the piston 362 is restricted by the recoil strength of the spring 368 and also by contact against the shock absorber 362a provided at the bottom end of portion of the cylinder 361. Harsh contact between the piston and cylinder is thereby prevented.

In the parent application, EP-A-0211672, we claim a scroll type compressor which is characterised in that the communicating means is arranged to pass the discharged gas in the cylinder into the suction chamber when the piston has been pushed upwards from the lowermost position by a given distance.

# Claims

1. A scroll type compressor including a housing (10) having an inlet port and outlet port ; a fixed scroll (212) fixedly disposed within the housing and having a circular end plate (211) from which a first spiral element (21) extends ; an orbiting scroll (22) having a circular end plate (221) from which a second spiral element (222) extends, the first and second spiral elements interfitting at an angular and radial offset to make a plurality of line contacts to define at least one pair of fluid pockets within the interior of the housing; a driving mechanism (20, 13, 30) operatively connected to the orbiting scroll (22) to effect orbital motion of the orbiting scroll to change the volume of the fluid pockets ; a rotation preventing mechanism (24) for preventing rotation of the orbiting scroll during orbital motion, the circular end plate of the fixed scroll dividing the interior of the housing into a front (27) chamber, and a rear (28) chamber, the front chamber being connected with the inlet port, and the rear chamber being divided into a discharge chamber (281) which connects the outlet port and a central fluid pocket formed between the scrolls and an intermediate pressure chamber (282), at least one pair of holes (214, 215) formed through the circular end plate (211) of the fixed scroll to form a fluid channel between the fluid pockets and the intermediate pressure chamber (282), a communication channel (283) formed through the circular plate (211) of the fixed scroll to form a fluid channel between the intermediate pressure chamber and the front chamber (27), and a control means (36) disposed on a portion of the intermediate pressure chamber for controlling the communication between the intermediate pressure chamber (282) and the suction chamber, the control means (36) comprising a cylinder (361) ; a piston (362) slidably disposed within the cylinder ; and a communicating means (363) ; the cylinder connecting with the intermediate pressure chamber (282), the suction chamber (271) and the discharge chamber (281), the piston sliding within the cylinder in accordance with the pressure difference between the pressure in the cylinder (361) and the pressure in the intermediate pressure chamber (282) ; characterised by the communicating means (363) being arranged to pass the discharged gas in the cylinder into the suction chamber (271) when the piston has been pushed upwards from the lowermost position by a given distance, and by a shock absorbing element (362a) being disposed on the bottom of the piston to absorb the impact force between the inner end surface of the cylinder aid the piston and for securing sealing between the piston aid the inner end surface of the cylinder.

2. A compressor according to claim 1, wherein the piston is made of a resinous material.

# Patentansprüche

1. Spiraltypkompressor mit einem Gehäuse (10) mit einer Einlaßöffnung und einer Auslaßöffnung ; einer fest innerhalb des Gehäuses vorgesehenen festen Spirale (212), die eine kreisförmige Endplatte (211) aufweist, von der sich ein erstes Spiralelement (21) erstreckt ; einer umlaufenden Spirale (22) mit einer kreisförmigen Endplatte (221), von der sich ein zweites Spiralelement (222) erstreckt, wobei das erste und zweite Spiralelement mit einer winkelmäßigen und radialen Versetzung zum Herstellen einer Mehrzahl von Linienkontakten zum Abgrenzen von mindestens einem Paar von Fluidtaschen innerhalb des Inneren des Gehäuses ineinandergreifen ; einem betriebsmäßig mit der umlaufenden Spirale (22) verbundenen Antriebsmechanismus (20, 13, 30) zum Bewirken einer umlaufenden Bewegung der umlaufenden Spirale zum Ändern des Volumens der Fluidtaschen ; einem Rotationsverhinderungsmechanismus (24) zum Verhindern der Rotation der umlaufenden Spirale während der umlaufenden Bewegung, wobei die kreisförmige Endplatte der festen Spirale das Innere des Gehäuses in eine vordere Kammer (27) und eine hintere Kammer (28) unterteilt, die vordere Kammer mit der Einlaßöffnung verbunden ist und die hintere Kammer in eine Entleerungskammer (281), die die Auslaßöffnung mit einer zwischen den Spiralen gebildeten zentralen Fluidtasche verbindet, und eine Mitteldruckkammer (282) unterteilt ist ; mindestens einem durch die kreisförmige Endplatte (211) der festen Spirale gebildeten Paar von Löchern (214, 215) zum Bilden eines Fluidkanales zwischen den Fluidtaschen und der Mitteldruckkammer (282) ; einem durch die kreisförmige Endplatte (211) der festen Spirale gebildeten Kommunikationskanal (283) zum Bilden eines Fluidkanales zwischen der Mitteldruckkammer und der vorderen Kammer (27) ; und einer auf einem Abschnitt der Mitteldruckkammer vorgesehenen Steuereinrichtung (36) zum Steuern der Kommunikation zwischen der Mitteldruckkammer (282) und der Ansaugkammer, wobei die Steuereinrichtung (36) einen Zylinder (361) aufweist ; einem verschiebbar in dem Zylinder vorgesehenen Kolben (362) ; und einer Kommunikations-einrichtung (363) ; wobei der Zylinder mit der Mitteldruckkammer (282), der Ansaugkammer (271) und der Entleerungskammer (281) verbunden ist, der Kolben in dem Zylinder entsprechend der Druckdifferenz zwischen dem Druck in dem Zylinder (361) und dem Druck in der Mitteldruckkammer (282) verschoben wird ; dadurch gekennzeichnet, daß die Kommunikationseinrichtung (363) zum Durchlassen des entleerten Gases im Zylinder in die Ansaugkammer (271), wenn der Kolben aufwärt; von der untersten Position um einen gegebenen Abstand gestoßen worden ist, ausgebildet ist und daß ein Stoßabsorptionselement (362a) auf dem Boden des Kolbens zum Absorbieren der Aufschlagkraft zwischen der inneren Endoberfläche des zylinders und dem Kolben und zum Sicherstellen der Abdichtung zwischen dem Kolben und der inneren Endoberfläche des Zylinders vorgesehen ist.

2. Kompressor nach Anspruch 1, bei dem der Kolben aus einem harzartigen Material gemacht ist.

## Revendications

1. Compresseur de type à volutes imbriquées comprenant un carter (10) muni d'un orifice d'entrée et d'un orifice de sortie ; une volute fixe (212) montée de façon fixe à l'intérieur du carter et comportant une plaque d'extrémité circulaire (211) sur laquelle fait saillie un premier élément de spirale (21) ; une volute orbitale (22) comportant une plaque d'extrémité circulaire (221) sur laquelle fait saillie un second élément de spirale (222), le premier élément de spirale et le second élément de spirale s'emboîtant avec un décalage angulaire et radial pour former un certain nombre de lignes de contact permettant de définir au moins une paire de poches à fluide à l'intérieur du carter ; un mécanisme d'entraînement (20, 13, 30) relié en fonctionnement à la volute orbitale (22) pour produire le mouvement orbital de cette volute orbitale de manière à modifier le volume des poches à fluide ; un mécanisme anti-rotation (24) destiné à empêcher la rotation de la volute orbitale pendant son mouvement orbital, la plaque d'extrémité circulaire de la volute fixe divisant l'intérieur du carter en une chambre avant (27) et une chambre arrière (28), la chambre avant étant reliée à l'orifice d'entrée et la chambre arrière étant divisée en une chambre de décharge (281) qui relie l'orifice de sortie à une poche à fluide centrale formée entre les volutes, et une chambre de pression intermédiaire (282) ; au moins une paire de trous (214, 215) percés dans la plaque d'extrémité circulaire (211) de la volute fixe pour former un passage de fluide entre les poches à fluide et la chambre de pression intermédiaire (282) ; un passage de communication (283) traversant la plaque circulaire (211) de la volute fixe pour former un passage de fluide entre la chambre de pression intermédiaire et la chambre avant (27) ; et des moyens de commande (36) disposés sur une partie de la chambre de pression intermédiaire pour commander la communication entre la chambre de pression intermédiaire (282) et la chambre d'aspiration, ces moyens de commande (36) comprenant un cylindre (361) ; un piston (362) monté en glissement à l'intérieur du cylindre ; et des moyens de communication (363) ; le cylindre étant relié à la chambre de pression intermédiaire (282), à la chambre d'aspiration (271) et à la chambre de décharge (281), et le piston glissant à l'intérieur du cylindre en fonction de la différence de pressions entre la pression régnant dans le cylindre (361) et la pression régnant dans la chambre de pression intermédiaire (282) ; compresseur caractérisé en ce que les moyens de communication (363) sont conçus de manière à laisser passer dans la chambre d'aspiration (271) le gaz déchargé dans le cylindre lorsque le piston a été poussé vers le haut sur une distance donnée à partir de sa position la plus basse, et en ce qu'un élément amortisseur de choc (362a) est placé sur le fond du piston pour absorber la force d'impact entre la surface d'extrémité intérieure du cylindre et le piston, et pour assurer l'étanchéité entre le piston et la surface d'extrémité intérieure du cylindre.

2. Compresseur selon la revendication 1, caractérisé en ce que le piston est réalisé dans un matériau en résine.

# Fig.1.

# Fig. 6.

Fig. 2.

# Fig .3(a).

Fig.3(b).

Fig.4.

Fig.5.